Europäisches Patentamt

European Patent Office

Office européen des brevets

(11) Veröffentlichungsnummer: **0 178 535**

**A1**

(12) **EUROPÄISCHE PATENTANMELDUNG**

(21) Anmeldenummer: 85112475.0

(22) Anmeldetag: 02.10.85

(51) Int. Cl.⁴: **G09B 5/08** , G09B 19/00 , G09B 19/24

(30) Priorität: 16.10.84 DE 3437889

(43) Veröffentlichungstag der Anmeldung:
23.04.86 Patentblatt 86/17

(84) Benannte Vertragsstaaten:
CH DE FR IT LI SE

(71) Anmelder: **Siemens Aktiengesellschaft**
**Berlin und München Wittelsbacherplatz 2**
**D-8000 München 2(DE)**

(72) Erfinder: **Röhrle, Josef, Dipl.-Ing. (FH)**
**Am Kahlberg 12**
**D-8521 Heßdorf(DE)**

(54) Einrichtung zum Koppeln mehrerer Werkzeugmaschinensteuerungen für Schulungszwecke.

㉗ Um bei einer beliebigen Anzahl von Werkzeugmaschinensteuerungen (W1 bis W4) zu ermöglichen, daß jeweils die zur Anzeige zu bringenden Daten einer der Werkzeugmaschinensteuerungen (W3) allen oder ausgewählten Werkzeugmaschinensteuerungen (W1, W2) zugeführt werden können, ist jeder Werkzeugmaschinensteuerung (W1 bis W4) eine Umschaltbaugruppe (U1 bis U4) zugeordnet. Sämtliche Umschaltbaugruppen (U1 bis U4) sind über eine Ringleitung (R12, R23, R34, R41) miteinander verbunden. Die Steuersignale für die Umschaltbaugruppe (U1 bis U4) werden über eine Steuerbaugruppe (ST) ausgelöst.

EP 0 178 535 A1

Einrichtung zum Koppeln mehrerer Werkzeugmaschinensteuerungen für Schulungszwecke

Die Erfindung bezieht sich auf eine Einrichtung zum Koppeln mehrerer Werkzeugmaschinensteuerungen, insbesondere für Schulungszwecke, wobei jede Werkzeugmaschinensteuerung als eine Datenquelle beispielsweise jeweils einen Graphikprozessor und als eine Datensenke beispielsweise jeweils ein Anzeigegerät aufweist.

Bei der Kopplung mehrerer Werkzeugmaschinensteuerungen für Schulungszwecke wurde bisher stets eine auf die jeweilige Anzahl von Steuerungen zugeschnittene spezifische Schalteinrichtung vorgesehen. Bei derartigen Einrichtungen war es nicht ohne weiteres möglich, eine Änderung der Anzahl von Teilnehmern vorzunehmen. Ferner war es bei derartigen Einrichtungen nicht möglich, daß jeweils eine beliebige Anzahl von Teilnehmern die von einer jeweils vorgegebenen beliebigen Werkzeugmaschinensteuerung zur Anzeige zu bringenden Daten gleichzeitig empfängt.

Aufgabe der Erfindung ist es, eine Einrichtung der eingangs genannten Art so auszubilden, daß ein für Schulungszwecke optimaler Datenfluß realisierbar ist. Dabei soll die Anzahl der Teilnehmer in äußerst einfacher Weise den Erfordernissen des Schulungsbetriebes angepaßt werden können.

Gemäß der Erfindung wird diese Aufgabe dadurch gelöst, daß jeder Werkzeugmaschinensteuerung jeweils eine Umschaltbaugruppe zugeordnet ist, die jeweils einen ersten Dateneingang für Daten von der zugeordneten Datenquelle, jeweils einen ersten Datenausgang für Daten an die zugeordnete Datensenke sowie jeweils einen zweiten Dateneingang und jeweils einen zweiten Datenausgang zum Einschleifen in eine zwischen den Umschaltbaugruppen vorgesehene Ringleitung aufweist, daß für jede Umschaltbaugruppe ein Verstärker vorgesehen ist, durch den der Signalpegel am zweiten Datenausgang auf einen jeweils vorgegebenen Wert einstellbar ist und daß Schaltmittel vorgesehen sind, durch die bei jeweils einer, Daten in die Ringleitung speisenden Werkzeugmaschinensteuerung die Verbindung über den zweiten Dateneingang der dieser zugehörigen Umschaltbaugruppe an die Ringleitung unterbrechbar und die Verbindung zwischen zugeordneter Datenquelle sowohl an die zugeordnete Datensenke als über den Verstärker an den zweiten Datenausgang schließbar ist und durch die alle, die Daten der Ringleitung empfangenden Werkzeugmaschinensteuerungen mit der jeweils zugeordneten Datensenke ausschließlich an den jeweiligen zweiten Dateneingang koppelbar sind.

Durch die Verwendung jeweils eines Verstärkers in jeder Umschaltbaugruppe wird erreicht, daß auch bei unterschiedlichen Entfernungen zwischen den Standorten der einzelnen Werkzeugmaschinensteuerungen stets für einen ausreichenden Empfangspegel gesorgt ist.

Ein autarkes Arbeiten an einzelnen Werkzeugmaschinensteuerungen wird dadurch ermöglicht, daß durch die Schaltmittel bei vorgegebenen Werkzeugmaschinensteuerungen deren jeweilige Datenquelle entkoppelt von der Ringleitung mit der jeweils zugeordneten Datensenke verbindbar ist.

Dadurch, daß die Schaltsignale für die Schaltmittel über eine zentrale Steuerbaugruppe auslösbar sind, ist die Lenkung des Datenflusses durch eine einzige, z.B. dem jeweiligen Lehrer zugeordnete, zentrale Einheit gewährleistet.

Wenn die Schaltsignale den Umschaltbaugruppen über die Ringleitung zuführbar sind, kann auf gesonderte Steuerleitungen verzichtet werden. Eine solche Maßnahme ist insbesondere bei weiten Entfernungen zwischen den Standorten der einzelnen Werkzeugmaschinensteuerungen vorteilhaft, um den Leitungsaufwand zu minimieren.

Für den Fall, daß der Datenfluß zwischen den einzelnen Werkzeugmaschinensteuerungen über Busleitungen erfolgt, erweist es sich als vorteilhaft, daß als Schaltmittel Bustreiber vorgesehen sind, die als handelsübliche Bauelemente leicht verfügbar sind.

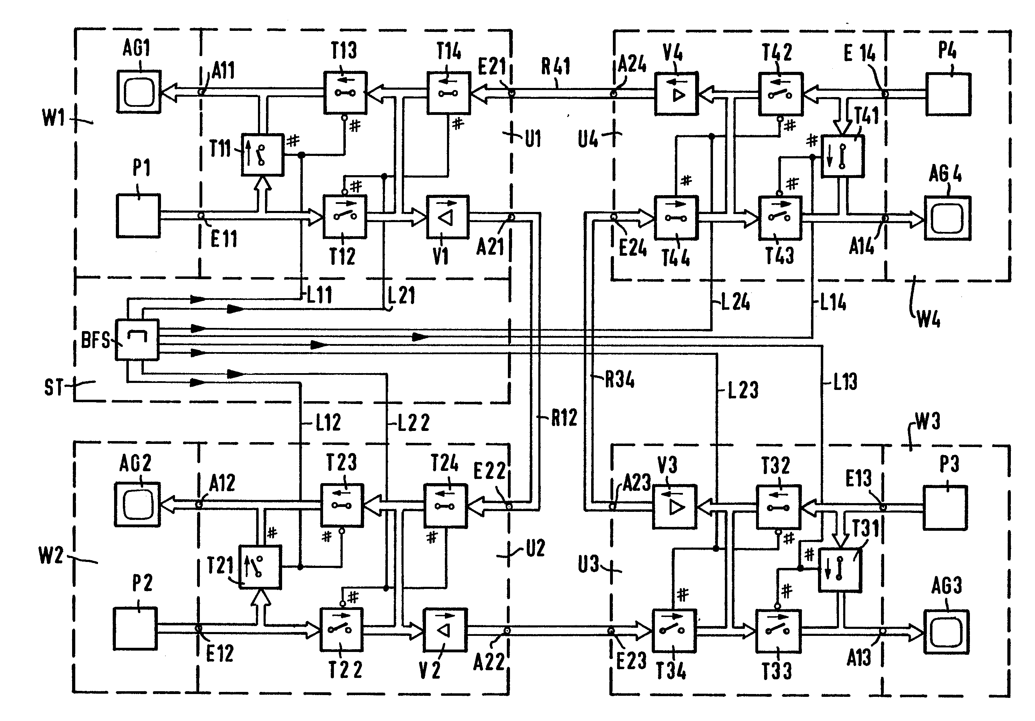

Ein Ausführungsbeispiel der Erfindung wird in der Zeichnung dargestellt und im folgenden näher erläutert.

Die Darstellung zeigt in Form eines Blockschaltbildes vier Werkzeugmaschinensteuerungen W1 bis W4 (gestrichelt angedeutet). Jede der Werkzeugmaschinensteuerungen W1 bis W4 beinhaltet dabei jeweils einen Graphikprozessor P1 bis P4 als Datenquelle sowie jeweils ein Anzeigegerät AG1 bis AG4 als Datensenke, das die von der jeweiligen Werkzeugmaschinensteuerung W1 bis W4 anzuzeigenden Daten bildlich darstellen kann.

Jeder der Werkzeugmaschinensteuerungen W1 bis W4 ist jeweils eine Umschaltbaugruppe U1 bis U4 (ebenfalls gestrichelt dargestellt) zugeordnet. Jede Umschaltbaugruppe U1 bis U4 weist einen ersten Dateneingang E11 bis E14, einen ersten Datenausgang A11 bis A14, einen zweiten Dateneingang E21 bis E24 und einen zweiten Datenausgang A21 bis A24 auf. Die ersten Dateneingänge E11 bis E14 nehmen dabei über wie alle weiteren Datenleitungen durch offene Pfeile dargestellte Datenleitungen die Daten der zugehörigen Graphikprozessoren P1 bis P4. auf.(Der Datenverkehr auf den Datenleitungen kann je nach Erfordernis entweder seriell oder parallel erfolgen.) Die ersten Datenausgänge A11 bis A14 speisen die jeweiligen Anzeigegeräte AG1 bis AG4, z.B. Monitore, mit anzuzeigenden Daten. Die zweiten Dateneingänge E21 bis E24 entnehmen den Abschnitten R41, R21, R23 bzw. R34 einer als zentrale Datenleitung vorgesehenen Ringleitung die in dieser jeweils vorliegenden Daten. Über die zweiten Datenausgänge A21 bis A24 werden von den Umschaltbaugruppen U1 bis U4 entweder von den zugehörigen Werkzeugmaschinensteuerungen W1 bis W4 kommende Daten der Ringleitung in noch zu erläuternder Weise eingeprägt oder aber über einen Bustreiber T14, T24, T34 bzw. T44, auf dessen Ansteuerung noch eingegangen wird,und einen jeder der Umschaltbaugruppe U1 bis U4 zugeordneten jeweiligen Verstärker V1 bis V4 wird das über die Ringleitung der jeweiligen Umschaltbaugruppe U1 bis U4 zugeleitet Signal verstärkt wieder in die Ringleitung eingespeist. Die Verstärkungsfaktoren der Verstärker V1 bis V4 werden dabei entsprechenden den zu erwartenden Signaldämpfungen ausgelegt.

Neben den Bustreibern T14, T24, T34 und T44 ist jeder der Umschaltbaugruppen U1 bis U4 ein die Daten des jeweils zugehörigen Graphikprozessors P1 bis P4 an das zugehörige Anzeigegerät AG1 bis AG4 schaltende Bustreiber T11, T21, T31 bzw. T41 vorgesehen. Ferner ist jeder der Umschaltbaugruppen U1 bis U4 ein Bustreiber T12, T22, T32 bzw. T42 zugeordnet, der es ermöglicht, daß die Daten des zugehörigen Graphikprozessors P1 bis P4 über den jeweils zugeordneten Verstärker V1 bis V4 in die Ringleitung eingespeist wird. Bustreiber T13, T23, T33 bzw. T43 dienen dazu, die über die eingangs erwähnten Bustreiber T14, T24, T34 bzw. T44 der Ringleitung entnommenen Daten den Anzeigegeräten AG1 bis AG4 zuzuführen.

Die Betätigung der Bustreiber T11 bis T14, T21 bis T24, T31 bis T34, und T41 bis T44 erfolgt durch binäre Steuersignale,die von einem Bedienfeld BFS einer Steuerbaugruppe ST ausgelöst werden, die der Werkzeugmaschinensteuerung W1 zugeordnet ist. Die Zuordnung ist durch gestrichelte Linien angeordnet. Das Bedienfeld BFS ist dabei im Schulungsbetrieb dem jeweiligen Lehrer beigestellt.

Im dargestellten Ausführungsbeispiel ist angenommen,daß die Daten vom Graphikprozessor P3 der Werkzeugmaschinensteuerung W3 den Werkzeugmaschinensteuerungen W2 und W1 zugeleitet werden sollen, die diese Daten auf den zugehörigen Anzeigegeräte AG2 und AG1 anzeigen. Die Werkzeugmaschinensteuerung W4 soll dahingegen vom Datenfluß auf der Ringleitung unabhängig tätig sein können.

Dazu wird durch ein Steuersignal logisch "0" auf der Leitung L23 die Ringleitung am zweiten Dateneingang der Umschaltbaugruppe U3 unterbrochen. Ferner wird durch dieses logische Signal der Bustreiber T32 geschlossen, wodurch die Daten des Graphikprozessors P3 über den Bustreiber T32 und den Verstärker V3 in den Ringleitungsabschnitt R34 eingespeist werden können. Die vom Graphikprozessor P3 kommenden Daten gelangen ferner über den Bustreiber T31 an das Anzeigegerät AG3. Dazu ist auf einer Leitung L13 vom Bedienfeld BFS der Steuerbaugruppe ST ein Signal logisch "1" auszulösen. Dieses Steuersignal dient gleichzeitig dazu, den Bustreiber T33, unwirksam zu schalten, um mit Sicherheit weitere Dateneinspeisungen zum Anzeigegerät AG3 zu verhindern.

Für die Umschaltbaugruppen U1, U2 und U4 werden über Leitungen L21, L22 und L24 Steuersignale logisch "1" ausgelöst, die dazu dienen, daß die Daten des jeweils speisenden Ringleitungsabschnittes R41, R12 bzw. R34 über die Bustreiber T14, T24 bzw. T44 und die Verstärker V1, V2 bzw. V4 in die ausspeisenden Ringleitungsabschnitte R12, R23 bzw. R41 geschaltet werden. Für die Werkzeugmaschinensteuerungen W1, W2 und W4 wird ferner sichergestellt, daß durch diese Steuersignale die Bustreiber T12, T22 bzw. T42 geöffnet sind, so daß von den Graphikprozessoren P1, P2 bzw. P3 keine Daten in die Ringleitung eingespeist werden können.

Für die Werkzeugmaschinensteuerungen W1 und W2, welche die Daten von der Werkzeugmaschinensteuerung W3 empfangen sollen, ist durch Steuersignale logisch "0" auf Leitungen L11 und L12 sichergestellt, daß Daten der zugehörigen Graphikprozessoren P1 und P2 nicht zur Anzeige gebracht werden können, während zugleich durch Wirksamschalten der Bustreiber T13 und T23 sichergestellt ist, daß die von den Ringleitungsabschnitten R41 über die Bustreiber T14 bzw.über den Ringleitungsabschnitt R12 über den Bustreiber T24 eingespeisten Daten den Anzeigeeinrichtungen AG1 und AG2 zugeführt werden.

Durch ein Steuersignal logisch "1" auf der Leitung L14 wird für die Werkzeugmaschinensteuerung W4 und deren zugehörige Umschaltbaugruppe U4 eine Kopplung des Graphikprozessors P4 mit dem Anzeigegerät AG4 über den Bustreiber T41 ermöglicht, wobei der Bustreiber T43 sicherstellt, daß die von der Ringleitung kommenden Daten unwirksam bleiben, damit ein autarker Betrieb der Werkzeugmaschinensteuerung W4 möglich ist.

Es wäre auch möglich, an Stelle von Bilddaten auch weitere Informationen, z.B. Programmteile, über die Ringleitung zum Austausch bereitzustellen.

## Ansprüche

1. Einrichtung zum Koppeln mehrerer Werkzeugmaschinensteuerungen, insbesondere für Schulungszwecke, wobei jede Werkzeugmaschinensteuerung als eine Datenquelle beispielsweise jeweils einen Graphikprozessor und als eine Datensenke beispielsweise jeweils ein Anzeigegerät aufweist, dadurch gekennzeichnet,daß jeder Werkzeugmaschinensteuerung (W1 bis W4) jeweils eine Umschaltbaugruppe (U1 bis U4) zugeordnet ist, die jeweils einen ersten Dateneingang (E11 bis E14) für Daten von der zugeordneten Datenquelle (P1 bis P4), jeweils einen ersten Datenausgang (A11 bis A14) für Daten an die zugeordnete Datensenke (AG1 bis AG4) sowie jeweils einen zweiten Dateneingang (E21 bis E24) und jeweils einen zweiten Datenausgang (A21 bis A24) zum Einschleifen in eine zwischen den Umschaltbaugruppen (U1 bis U4) vorgesehene Ringleitung (R12, R23, R34, R41) aufweist, daß für jede Umschaltbaugruppe (U1 bis U4) ein Verstärker (V1 bis V4) vorgesehen ist, durch den der Signalpegel am zweiten Datenausgang (A21 bis A24) auf einen jeweils vorgegebenen Wert einstellbar ist und daß Schaltmittel (T11 bis T14,T21 bis T24, T31 bis T34, T41 bis T44) vorgesehen sind, durch die bei jeweils einer, Daten in die Ringleitung (R12,R23, R34, R41) speisenden Werkzeugmaschinensteuerung (W3) die Verbindung über den zweiten Dateneingang (E23) der dieser zugehörigen Umschaltbaugruppe (U3) an die Ringleitung (R12, R23, R34, R41) unterbrechbar und die Verbindung zwischen zugeordneter Datenquelle (P3) sowohl an die zugeordnete Datensenke (AG3) als auch über den Verstärker (V3) an den zweiten Datenausgang (A23) schließbar ist und durch die alle, die Daten der Ringleitung (R12, R23, R34, R41) empfangenden Werkzeugmaschinensteuerungen (W1, W3) mit der jeweils zugeordneten Datensenke (AG1, AG2) ausschließlich an den jeweiligen zweiten Dateneingang (E21, E22) koppelbar sind.

2. Einrichtung nach Anspruch 1, dadurch gekennzeichnet, daß durch die Schaltmittel (T41 bis 44) bei vorgebbaren Werkzeugmaschinensteuerungen (W4) deren jeweilige Datenquelle (P4) entkoppelt von der Ringleitung (R12, R23, R34, R41) mit der jeweils zugeordneten Datensenke (AG4) verbindbar ist.

3. Einrichtung nach Anspruch 1 oder 2, dadurch gekennzeichnet, daß die Schaltsignale für die Schaltmittel (T11 bis T14, T21 bis T24, T31 bis T34, T41 bis T44) über eine zentrale Steuerbaugruppe (ST) auslösbar sind.

4. Einrichtung nach Anspruch 3, dadurch gekennzeichnet, daß die Schaltsignale den Umschaltbaugruppen (U1 bis U4) über die Ringleitung (R12, R23, R34, R41) zuführbar sind.

5. Einrichtung nach einem der vorstehenden Ansprüche, wobei der Datenfluß über Busleitungen erfolgt, dadurch gekennzeichnet, daß als Schaltmittel Bustreiber (T11 bis T14, T21 bis T24, T31 bis T34, T41 bis T44) vorgesehen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 691 528 (J.F. CALIVAGNA u.a.)<br>* Zusammenfassung; Seite 16; Anspruch 1; Figuren 1-13 *<br><br>--- | 1-5 | G 09 B 5/08<br>G 09 B 19/00<br>G 09 B 19/24 |
| A | FR-A-2 368 099 (GRUMMANN AEROSPACE)<br><br>--- | | |
| A | US-A-4 167 821 (H.B. GIBSON)<br><br>----- | | |

| | RECHERCHIERTE SACHGEBIETE (Int. Cl.4) |
|---|---|
| | G 09 B |

Der vorliegende Recherchenbericht wurde für alle Patentansprüche erstellt.

| Recherchenort | Abschlußdatum der Recherche | Prüfer |
|---|---|---|
| DEN HAAG | 06-11-1985 | ODGERS M.L. |